**Europäisches Patentamt**

**European Patent Office**

**Office européen des brevets**

(11) Numéro de publication: **0 100 782**
**B1**

## (12) FASCICULE DE BREVET EUROPEEN

(45) Date de publication du fascicule du brevet: **11.06.86**

(21) Numéro de dépôt: **82107317.8**

(22) Date de dépôt: **12.08.82**

(51) Int. Cl.⁴: **B 23 H 1/00,** B 23 Q 3/18

(54) **Dispositif de fixation de pièces à travailler pour machine d'étincelage à fil.**

(43) Date de publication de la demande:
**22.02.84 Bulletin 84/08**

(45) Mention de la délivrance du brevet:
**11.06.86 Bulletin 86/24**

(84) Etats contractants désignés:
**DE FR IT SE**

(56) Documents cités:
**CH-A- 462 342**
**CH-A- 526 365**
**CH-A- 592 492**
**DE-A-2 538 624**
**DE-B-1 752 153**
**DE-C- 896 420**
**FR-A-2 285 207**

(73) Titulaire: **IMEA SA**
**CH-2732 Reconvilier (CH)**

(72) Inventeur: **Lehmann, Franz**
**rue du 16 mars 10**
**CH-2732 Reconvilier (CH)**

(74) Mandataire: **Steiner, Martin et al**
**c/o AMMANN INGENIEURS-CONSEILS EN**
**PROPRIETE INTELLECTUELLE SA BERNE**
**Schwarztorstrasse 31**
**CH-3001 Bern (CH)**

Courier Press, Leamington Spa, England.

EP 0 100 782 B1

**Description**

La présente invention concerne un dispositif de fixation de pièces à travailler pour machines d'étincelage à fil.

On connait de tels dispositifs permettant de fixer des pièces de formes très variées et de grandeurs différentes sur des machine d'étincelage à fil. Ces dispositifs se présentent sous forme d'équerre et la pièce à usiner est fixée, selon le cas, avec ou sans plaquettes d'appui. Le serrage avec plaquettes d'appui convient aux máchines d'électro-érosion à fil muni d'un système d'arrosage conventionel, tandis que le serrage sans plaquettes d'appui est utilisé sur les machines d'étincelage à fil avec équipement de coupe rapide. Ce mode de serrage est préféré lorsque la bague d'arrosage pourrait toucher la plaquette d'appui. Cependant de tels dispositifs, bien qu'améliorant la précision de mise en place des pièces à usiner, sont relativement statiques en ce sens qu'ils ne possèdent pas de possibilité de réglage permettant de positionner la pièce à usiner par rapport au fil et de l'orienter par rapport à la direction de ce fil dans sa position de travail.

Partant de ce qui précède, le but de la présente invention est de réaliser un dispositif de fixation de pièces à travailler pour machines d'étincelage à fil permettant de positionner et d'orienter de manière précise la pièce à usiner par rapport au fil et à la direction de celui-ci dans sa position de travail.

Pour atteindre ce but, le dispositif selon l'invention est caractérisé par le fait qu'il comprend au moins une plaque de base porteuse d'un premier mors, des plaques de fixation du dispositif et un coulisseau déplaceable le long de la plaque de base et porteur d'un second mors, ladite plaque de base étant réglable par rapport auxdites plaques de fixation pour permettre une orientation de ladite pièce relativement à la direction dudit fil dans sa position de travail sur la machine.

L'invention va être décrite ci-après à titre d'exemple et à l'aide du dessin dans lequel:

la fig. 1 montre une vue de dessus, partiellement en coupè du dispositif selon l'invention,

la fig. 2 est une coupe selon la ligne II—II du dispositif de la fig. 1,

la fig. 3 est une coupe selon la ligne III—III du dispositif de la fig. 1,

la fig. 4 est une vue en élévation du dispositif de la fig. 1 sur sa table inclinable, et

la fig. 5 est une vue de côté du dispositif de la fig. 1 sur sa table inclinable.

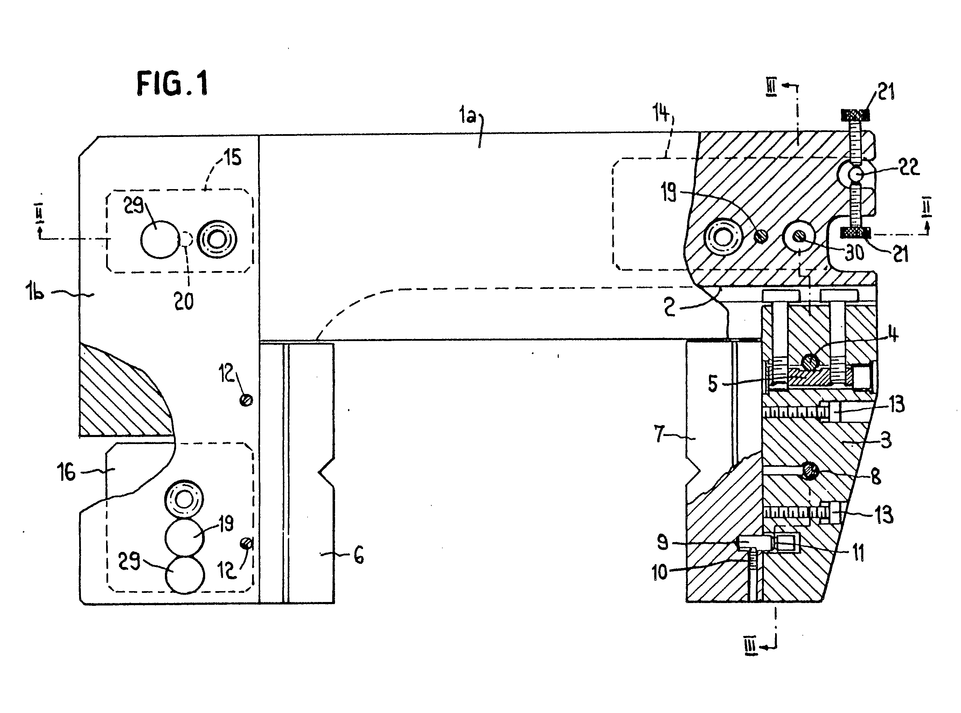

Selon les fig. 1, 2 et 3, le dispositif comporte deux plaques de base 1a (longue) et 1b (courte), chacune de forme rectangulaire, assemblées en forme d'équerre. Comme variante, le dispositif peut aussi être réalisé avec une seule plaque de base en forme d'équerre comprenant une partie longue (1a) et une partie courte (1b). La plaque de base 1a, ou la partie longue de la plaque de base unique comporte une rainure 2 en forme de T dans laquelle se déplace un coulisseau 3 susceptible d'être fixé à la plaque de base par un excentrique de blocage 4 agissant contre un axe de blocage 5.

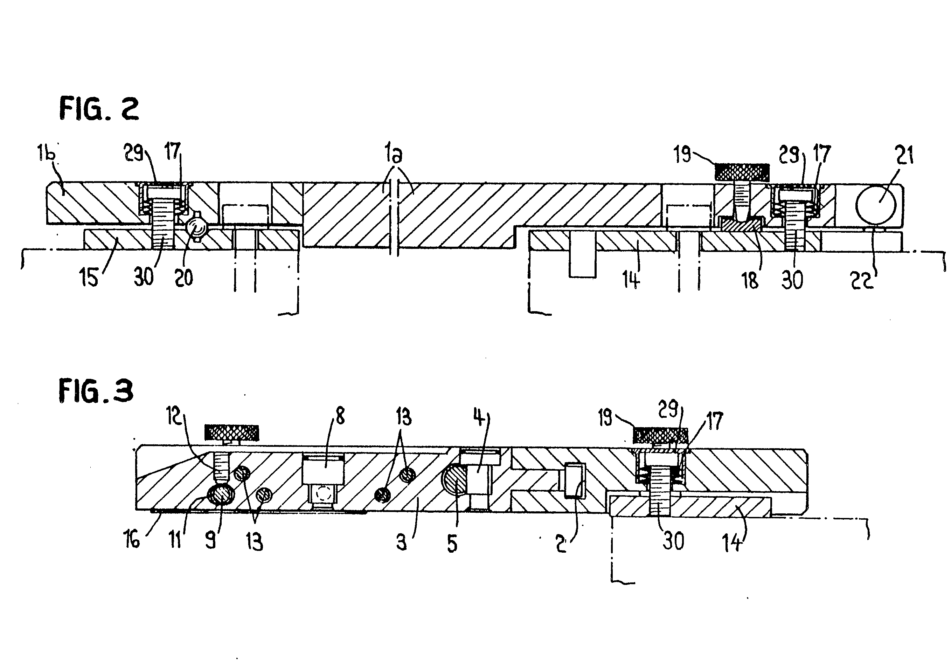

La plaque de base courte 1b ou la partie courte de la plaque de base unique porte un mors 6 et le coulisseau 3 un mors 7. Lors du serrage d'une pièce à usiner, cette dernière est placée contre le mors 6 et le coulisseau 3 est déplacé jusqu'à ce que le mors 7 qu'il supporte vienne en contact avec l'autre côté de la pièce. L'excentrique 4 permet alors de bloquer le coulisseau qui comporte encore un excentrique de serrage 8 permettant de serrer la pièce entre les deux mors 6 et 7. En principe, chacun des mors 6 et 7 peut avoir une forme quelconque, adaptée à la forme et à la grandeur de la pièce à usiner. La fig. 1 montre que les mors comportent une goupille de fixation 9 tenue par une vis 10 et comportant une gorge 11 dans laquelle s'engage l'extrémité d'un poussoir à ressort 12 comme indiqué en fig. 3. Ceci montre que la fixation des mors est facile et rapide, ce qui facilite leur interchangeabilité. Dans le cas où la pièce à usiner a des faces non parallèles, le mors 7 peut adapter sa position angulaire dans des limites déterminées dans le plan de la plaque de base par le fait que la goupille de fixation est montée avec jeu dans le coulisseau. Le défaut de parallélité peut donc être corrigé entre certaines limites par une inclinaison correspondante du mors 7. Des vis de pression 13 permettent de serrer ce dernier contre la pièce à travailler avec l'inclinaison désirée. La fig. 3 montre que les vis de pression 13 sont au nombre de quatre ou de deux paires, selon la hauteur des mors, par exemple de 10 mm et de 20 mm.

Le dispositif comporte encore des plaques de fixation 14, 15 et 16 fixées à la partie inférieure de la ou des plaques de base 1a et 1b. Ces plaques de fixation sont elles-mêmes fixés aux plaques de base par des vis 30 rendues étanche par des bouchons d'étanchéité 29. Des rondelles élastiques-bombées 17 permettent un déplacement relatif limité entre les plaques de fixation et les plaques de base. D'autre part les plaques de base 1a et 1b assemblées de manière rigide sous forme d'équerre reposent en trois points sur les plaques de fixation. Chacune des plaques de fixation 14 et 16 supporte en effet la plaque de base 1a + 1b par une vis de réglage vertical 19 agissant sur un support 18 s'appuyant de manière mobile contre la plaque de fixation respective et l'angle de l'équerre repose sur une bille 20 située entre cette équerre et la plaque de fixation 15. La fixation en trois points selon une configuration rectangulaire de la plaque de base permet un réglage de cette dernière dans un axe unique et les vis de réglage vertical 19, permettent de donner entre certaines limites à la plaque de base, et en conséquence à la pièce à usiner, une orientation déterminée relativement à la direction du fil de la machine d'étincelage. Ceci permet d'améliorer la précision de l'usinage par le fait que le plan de la pièce à usiner ou le plan de l'ouverture à découper dans cette pièce peut être rendu entre autre exactement perpendiculaire à la direction du fil de la machine de la position de travail de ce fil sur la machine d'étincelage.

La fig. 1 montre que le dispositif selon l'invention comporte en outre deux vis de réglage 21 montées dans la plaque de base 1a et agissant contre une goupille 22 fixée dans la plaque de fixation 14. Ceci permet un déplacement angulaire limité de la plaque de base autour de la bille-support 20.

Ce qui précède montre que le dispositif selon l'invention est de forme plate facilitant son montage sur la machine ainsi que l'approche de la pièce à usiner du fil d'usinage en évitant des risques de collision avec d'autres éléments de la machine et qu'il comporte des moyens de réglage de l'orientation de la pièce à usiner par rapport à ce fil.

En raison des liquides corrosifs utilisés dans les machines d'étincelage à fil, le dispositif de fixation selon l'invention est avantageusement réalisé en acier inoxydable.

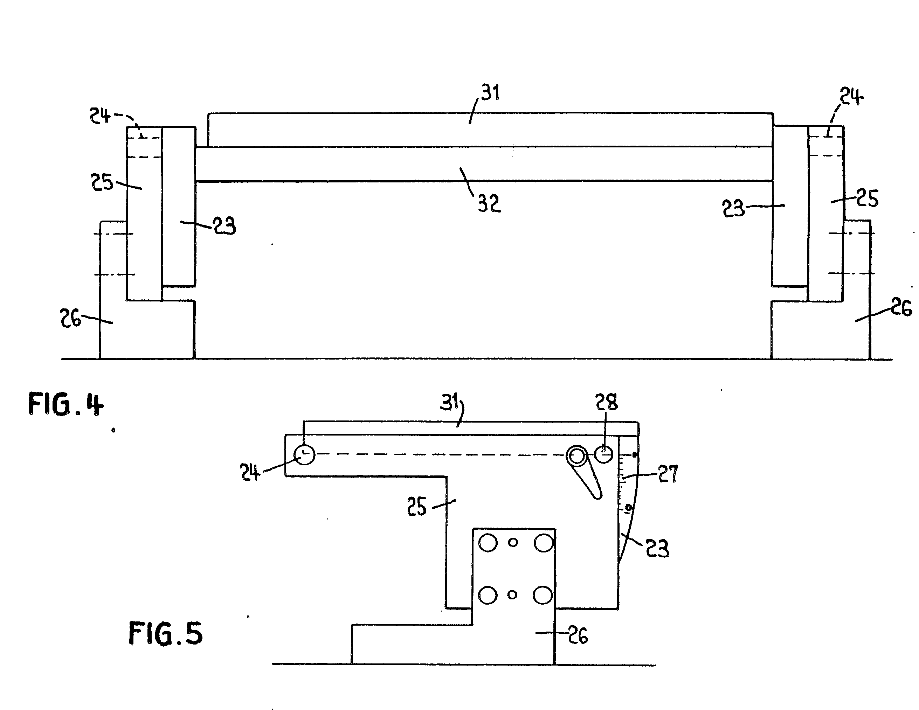

Une adjonction selon fig. 4 et 5 au système décrit ci-dessus permet de donner au dispositif et en conséquence à la pièce à usiner une inclinaison déterminée autour d'un axe. Dans ce but, le dispositif 31 en forme d'étau décrit ci-dessus comprend une plaque-support 32 sur laquelle il est monté par ses plaques de fixation 14 à 16. La plaque 32 est montée entre deux supports fixés sur la machine et elle est solidaire des plaques 23 susceptibles de tourner autour d'un axe de pivotement 24 dans les supports 25 fixés eux-mêmes aux bases 26 montées sur la machine. Comme indiqué en fig. 5, cette disposition permet d'incliner le dispositif 31 d'un angle déterminé autour de l'axe 24, dans le sens inverse des aiguilles de la montre. L'inclinaison est indiquée par une échelle graduée 27. Il est évident qu'un déplacement de l'axe de rotation en direction du milieu des mors permettrait d'incliner le dispositif d'un angle déterminé dans des deux sens de rotation. La fig. 5 montre qu'un arrêt 28 est prévu en position 0° du dispositif.

Ainsi, le dispositif selon l'invention permet un grand nombre de possibilités de réglage de la position et de l'orientation de la piece a usiner par rapport au fil de la machine d'étincelage et à la direction de ce fil dans se position de travail. Ceci permet d'augmenter fortement la précision de la mise en place et l'orientation des pièces à usiner et facilite la mise en place de ces pièces. Dans le cas où la pièce à usiner a un profil de forme compliquée, il peut être indiqué de la serrer entre des mors présentant une forme négative de ce même profil. De tels mors peuvent être produits facilement par étincelage à fil à l'aide du dispositif selon l'invention.

**Revendications**

1. Dispositif de fixation de pièces à travailler pour machines d'étincelage à fil, caractérisé par le fait qu'il comprend au moins une plaque de base (1a, 1b) porteuse d'un premier mors (6), des plaques de fixation (14, 15, 16) du dispositif et un coulisseau (3) déplaçable le long de la plaque de base et porteur d'un second mors (7), ladite plaque de base étant réglable par rapport auxdites plaques de fixation pour permettre une orientation de ladite pièce relativement à la direction dudit fil dans sa position de travail sur la machine, les éléments dudit dispositif étant réalisés en acier inoxydable.

2. Dispositif selon la revendication 1, caractérisé en ce qu'il est de configuration plate facilitant son montage sur la machine et l'approche de la pièce à travailler de la position de travail dudit fil, en évitant des risques de collision avec d'autres éléments de la machine.

3. Dispositif selon la revendication 1, caractérisé par le fait que la plaque de base (1a, 1b) est supportée par une fixation à trois points, positionnés selon une configuration rectangulaire permettant un réglage dans un axe unique.

4. Dispositif selon la revendication 1, caractérisé par le fait que ledit réglage de la plaque de base (1a, 1b) relativement auxdites plaques de fixation (14, 15, 16) est effectué par des vis de réglage vertical (19) montées dans ladite plaque de base et agissant sur des supports (18) s'appuyant de manière mobile contre lesdites plaques de fixation.

5. Dispositif selon la revendication 1, caractérisé par le fait que la plaque de base est en forme d'équerre et qu'elle porte à une extrémité des vis de réglage latéral (21) agissant contre une goupille (22) fixée dans l'une desdites plaques de fixation pour permettre un déplacement angulaire limité de la plaque de base autour d'une bille-support (20) montée dans l'angle de l'équerre, entre la plaque de base et une des plaques de fixation.

6. Dispositif selon la revendication 1, caractérisé par le fait que le coulisseau (3) est susceptible d'être fixé à ladite plaque de base (1a, 1b) par un excentrique de blocage (4) et qu'il comporte un excentrique de serrage (8) produisant la force nécessaire au serrage de ladite pièce entre lesdits mors (6, 7).

7. Dispositif selon la revendication 1, caractérisé par le fait que la fixation du second mors (7) audit coulisseau (3) permet une inclinaison angulaire limitée dudit mors dans le plan de la plaque de base et que le coulisseau comporte des vis de pression (13) permettant de serrer ledit second mors contre la pièce à travailler avec ladite inclinaison pour compenser un défaut de parallélité entre les faces opposées de ladite pièce à travailler.

8. Dispositif selon la revendication 1, caractérisé par le fait que lesdits mors (6, 7) sont tenus par un poussoir à ressort (12) agissant dans une gorge (11) d'une goupille (9) fixée dans lesdits mors, ce qui assure une interchangeabilité rapide et facile desdits mors.

9. Dispositif selon la revendication 1, caractérisé par le fait qu'il comprend en outre une plaque-support (32) sur laquelle sont fixées lesdites plaques de fixation (14, 15, 16), ladite plaque-support étant montée de manière orientable autour d'un axe de pivotement (24) dans des supports latéraux (25, 26) fixés sur la machine.

10. Utilisation du dispositif selon la revendication 1 pour la fabrication desdits mors (6, 7) sur une machine d'étincelage à fil.

**Patentansprüche**

1. Werkstückhaltevorrichtung für Funkenerosionsmaschine mit Drahtelektrode, dadurch gekennzeichnet, dass sie mindestens eine Grundplatte (1a, 1b), welche eine erste Spannbacke (6) trägt, Befestigungsplatten (14, 15, 16) der Vorrichtung und einen Schieber (3), welcher entlang der Grundplatte verschiebbar ist und eine zweite Spannbacke (7) trägt, aufweist, wobei die Grundplatte bezüglich den Befestigungsplatten einstellbar ist, um eine Orientierung des Werkstücks bezüglich der Richtung der Drahtelektrode in ihrer Arbeitsstellung auf der Maschine zu erlauben, wobei die Elemente der Werkstückhaltevorrichtung aus rostfreiem Stahl gefertigt sind.

2. Vorrichtung nach Anspruch 1, dadurch gekennzeichnet, dass sie eine flache Gestalt aufweist, um ihren Einbau auf der Maschine und das Zubringen des Werkstückes in Richtung der Arbeitsstellung der Drahtelektrode zu erleichtern, wobei die Gefahr von Zusammenstössen mit anderen Elementen der Maschine vermieden wird.

3. Vorrichtung nach Anspruch 1, dadurch gekennzeichnet, dass die Grundplatte (1a, 1b) durch eine Drei-Punkt-Befestigung getragen ist, welche Punkte in einer rechteckigen Konfiguration angeordnet sind, welche eine Einstellung in einer einzigen Achse erlaubt.

4. Vorrichtung nach Anspruch 1, dadurch gekennzeichnet, dass die Einstellung der Grundplatte (1a, 1b) bezüglich der Befestigungsplatten (14, 15, 16) durch vertikale Einstellschrauben ausgeführt ist, welche in der Grundplatte montiert sind und auf Stützen (18) einwirken, welche auf den Befestigungsplatten verschiebbar getragen sind.

5. Vorrichtung nach Anspruch 1, dadurch gekennzeichnet, dass die Grundplatte in Form eines Winkel ist, und dass sie an einem Ende Seiten-Einstellschrauben (21) aufweist, welche auf einen Stift (22) einwirken, der in einer der Befestigungsplatten befestigt ist, um eine begrenzte Winkelverschiebung der Grundplatte um eine Stützkugel (20) zu erlauben, welche in der Ecke des Winkels żwischen der Grundplatte und einer der Befestigungsplatten montiert ist.

6. Vorrichtung nach Anspruch 1, dadurch gekennzeichnet, dass der Schieber (3) durch einen Sperr-Exzenter (4) an der Grundplatte (1a, 1b) festgesetzt werden kann, und das sie einen Spannexzenter (8) aufweist, welcher die Kraft, die notwendig ist, um das Werkstück zwischen Spannbacken (6, 7) zu spannen, erzeugt.

7. Vorrichtung nach Anspruch 1, dadurch gekennzeichnet, dass die Befestigung der zweiten Spannbacke (7) an dem Schieber (3) einen begrenzten Neigungswinkel dieser Spannbacke in der Ebene der Grundplatte erlaubt, und dass der Schieber Druckschrauben (13) aufweist, welche die zweite Spannbacke mit dem genannten Neigungswinkel gegen das Werkstück zu spannen erlauben, um einen Parallelitätsfehler zwischen den entgegengesetzten Seiten des Werkstückes zu kompensieren.

8. Vorrichtung nach Anspruch 1, dadurch gekennzeichnet, dass die Spannbacken (6, 7) durch einen Federdrücker (12) gehalten sind, der in eine Rille (11) eines Stiftes (9), der in den Spannbacken befestigt ist, wirkt, was eine schnelle und leichte Austauschbarkeit der Spannbacken gewährleistet.

9. Vorrichtung nach Anspruch 1, dadurch gekennzeichnet, dass sie weiter eine Trägerplatte (32) aufweist, auf welcher die Befestigungsplatten (14, 15, 16) befestigt sind, wobei die Trägerplatte um eine Rotationsachse (24) schwenkbar montiert ist, die in Seitenträgern (25, 26) angebracht ist, welche auf der Maschine befestigt sind.

10. Verwendung der Vorrichtung nach Anspruch 1 für die Herstellung der Spannbacken (6, 7) auf einer Funkenerosionsmaschine mit Drahtelektrode.

**Claims**

1. Workpiece holding device for an electrical-discharge machine with wire electrode, characterized in that it comprises at least one base plate (1a, 1b) bearing a first jaw (6), fixing plates (14, 15, 16) of the device and a slide (3) displaceable along the base plate and bearing a second jaw (7), said base plate being adjustable with respect to said fixing plates for permitting said workpiece to be oriented with respect to the direction of said wire electrode in its working position on the machine, the elements of said device being made of stainless steel.

2. Device according to claim 1, characterized in that it is of flat configuration for facilitating its mounting on the machine and the approach of the workpiece toward said wire electrode in its working position while eliminating the risks of collision with other parts of the machine.

3. Device according to claim 1, characterized in that the base plate (1a, 1b) is supported upon a three-point fixation positioned according to a rectangular configuration permitting an adjustment according to a single axis.

4. Device according to claim 1, characterized in that said adjustment of the base plate (1a, 1b) with respect to said fixing plates (14, 15, 16) is accomplished by vertical adjustment screws (19) mounted in said base plate and acting on supports (18) slidably resting on said fixing plates.

5. Device according to claim 1, characterized in that the base plate is in form of a square and in that it comprises at one extremity side adjustment screws (21) acting against a pin (22) secured in one of said fixing plates for permitting a limited angular displacement of the base plate about a supporting ball (20) mounted in the corner of the square, between the base plate and one of the fixing plates.

6. Device according to claim 1, characterized in that the slide (3) is capable to be secured to said base plate (1a, 1b) by a locking eccentric (4) and in that it comprises a clamping eccentric (8) producing the force required for clamping said workpiece between said jaws (6, 7).

7. Device according to claim 1, characterized in that the fixation of the second jaw (7) to said slide (3) permits a limited angular tilting of said jaw in the plane of the base plate and in that the slide comprises pressure screws (13) permitting to clamp said second jaw with said tilting against the workpiece for compensation of a lack of parallelism between the opposed faces of said workpiece.

8. Device according to claim 1, characterized in that said jaws (6, 7) are held by a spring-pusher (12) acting into a groove (11) of a pin (9) secured in said jaws, thus ensuring a rapid and easy interchangeability of said jaws.

9. Device according to claim 1, further comprising a resting plate (32) on which are secured said fixing plates (14, 15, 16), said resting plate being capable to be oriented about an axis of rotation (24) in lateral supports (25, 26) secured to the machine.

10. Utilization of the device according to claim 1 for manufacturing said jaws (6, 7) on an electrical discharge machine with wire electrode.

**FIG.1**

0 100 782

FIG. 2

FIG. 3

FIG.4

FIG.5

0 100 782